# EUROPEAN PATENT SPECIFICATION

(11) **EP 2 553 517 B1**
(45) Date of publication and mention of the grant of the patent: **14.11.2018**
(21) Application number: 11712057.6
(22) Date of filing: 29.03.2011
(51) Int. Cl.: G02B 27/22, B41M 3/06, B41M 3/14, B42D 15/00, G06T 17/00

(54) **METHOD FOR PRODUCING A THREE-DIMENSIONAL IMAGE ON THE BASIS OF CALCULATED IMAGE ROTATIONS**
VERFAHREN ZUR ERZEUGUNG EINES DREIDIMENSIONALEN BILDES AUF DER BASIS VON BILDDREHUNGSBERECHNUNGEN
PROCÉDÉ DE PRODUCTION D'UNE IMAGE EN TROIS DIMENSIONS SUR LA BASE DE ROTATIONS D'IMAGE CALCULÉE

(30) Priority: 31.03.2010 NL 2004481
(43) Date of publication of application: 06.02.2013
(73) Proprietor: Morpho B.V., 2031 CC Haarlem (NL)
(72) Inventor: VAN DEN BERG, Jan, 2807 LH Gouda (NL); PLATVOET, Radboud Kweku Mensah, 1186 WE Amstelveen (NL)
(74) Representative: Nederlandsch Octrooibureau
(86) International application number: PCT/NL2011/050210
(87) International publication number: WO 2011/122943

(56) References cited:
- EP-A2- 0 712 032
- EP-A2- 0 996 022
- WO-A2-2006/110038
- DE-U1- 8 529 297
- US-A- 4 200 875
- JUI-CHEN WU, YUNG-SHENG CHEN, AND I-CHENG CHANG: "An Automatic Approach to Facial Feature Extraction for 3-D Face Modeling", IAENG INTERNATIONAL JOURNAL OF COMPUTER SCIENCE, vol. 33, no. 2, 24 May 2007 (2007-05-24), XP002638438, DOI: 10.1.1.148.7325

## Description

### Field of the invention

The invention relates to a method for producing a three-dimensional image. The invention relates in particular to a method for producing a three-dimensional portrait image of a person, comprising the steps of:
providing a two-dimensional basic image of the person,
supplying image values associated with image elements of the basic image to a processing device,
calculating in the processing device at least one image constructed from image elements and rotated through a rotation angle around a rotation point,
dividing the rotated image into image lines,
forming groups of corresponding image lines for at least two images, including the at least one rotated image,
supplying the image values associated with image elements located along the image lines for the groups of corresponding image lines to an imaging device, and
applying, with the imaging device, image intensities and/or colours corresponding to the image values onto a substrate under a pattern of linear lenses, in such a way that the image intensities and/or colours of each group of corresponding image lines are applied under a linear lens associated with the group.

### Background to the invention

It is known for a three-dimensional image to be created by producing two or more images of an object from a different angle. The images are divided into image lines in a digital processing unit and are interlaced, so that groups of image lines are formed. These groups of image lines are then applied onto an image layer of an image carrier, and a linear lens is applied above each group of image lines. The interlaced images under each lens are mapped by the linear lenses at a predefined viewing distance onto a left or a right eye, so that a stereoscopic image is obtained. One method for applying the image lines onto the image carrier is by means of a laser beam, which is focused by the linear lenses on an image layer of, for example, polycarbonate, where it causes a discolouration with an intensity depending on a greyscale value of an image element (pixel) located along the image line.

In an alternative method, the lines can be applied onto the image layer by means of a printing technique, after which the lenses are applied over the groups of printed image lines.

Three-dimensional images of the abovementioned type are used in identity documents such as identity cards, passports, driving licences or in access passes, bank passes and other secured identification means.

In order to obtain a stereoscopic effect at different viewing distances, four or more images of a person are often simultaneously created, each from a different angle. To do this, four or more digital cameras are used, which are set up at different angles and which simultaneously create an image from these different angles. A set-up of this type is relatively costly, due to the large number of cameras and the synchronous effect thereof. As a result, three-dimensional images, in particular portraits for use on identity media, can only be produced in a specialized environment.

A method according to the preamble to Claim 1 is known from WO 2006/110038. This publication describes how two rotation images can be obtained from a two-dimensional basic image by means of projection in an image processing device with the aid of special software, said images being applied in an interlaced manner under linear lenses in order to form a stereoscopic portrait image for use in a security or identification document.

A disadvantage of the known method is that the similarity with the original basic image may decrease through calculation of the rotation images, and that images calculated in this way are thereby less suitable for use in security and identification documents such as passports, driving licences, access badges, etc. As a result, the authenticity of a three-dimensional image of this type is difficult to establish on visual inspection.

An object of the invention is to provide a method for producing a three-dimensional image, with which a stereoscopic image can be created without special cameras, the authenticity of which can quickly be established on visual inspection. A further object is to provide a three-dimensional image of a person which reveals a close similarity with the imaged person. An object of the invention is also to provide a method with which a stereoscopic image can be produced in a relatively fast and economical manner, also without using a camera.

### Summary of the invention

For this purpose, the method according to the invention is characterized in that:
- the position of a number of facial points is determined in the two-dimensional basic image,
- a three-dimensional primary form of the person is formed in an image area on the basis of these facial points,
- in the image area, the first basic image is projected from a projection surface onto the three-dimensional primary form in order to produce a three-dimensional facial form in this way, and
- the rotated image is formed through rotation of the facial form and projection thereof onto the projection surface,
and that image lines are formed for the basic image which form part of the groups of corresponding image lines and are applied with the imaging device onto the substrate. A three-dimensional primary form is calculated in an image area in the processing device from a single capture by measuring the facial points in the basic image. The three-dimensional facial form is then determined in the processing device through projection of the basic image onto the primary form. Through projection of this three-dimensional facial form onto the projection area, at least one rotated image is calculated, with which an accurate stereoscopic image can be obtained. A "projection view generation" of this type according to the invention, unlike, for example, an "intermediate view generation", wherein the average missing images between two basic images are calculated, provides a rotation image closely resembling the person. Since the original basic image is also used in the formation of the three-dimensional, interlaced image, the visual check on the authenticity of the image can be carried out very quickly and effectively, and the risk of the unique characteristics of the image being lost through calculation is substantially reduced.

Since at least one closely similar rotated image is calculated from a single two-dimensional capture through "projection view generation" calculation in the processing device, said image being combined with the original two-dimensional capture, an accurate stereoscopic image can be obtained for use in identification documents or security documents from only one single conventional two-dimensional image, such as a scan or a photo. As a result, the stereoscopic photos associated with identity documents can be produced at various issue locations, such as photo studios, town halls, etc. Furthermore, the costs of producing the stereoscopic images are reduced through the use of a single camera or scanned-in photo.

In one embodiment, the imaged object is a human face and the distance D between the face and the camera is between 40 cm and 3.0 m, and the rotation angle of each calculated rotation image is between 3 and 10 degrees. Evidence reveals that an accurate stereoscopic image which is highly suitable for identification purposes can be obtained with these distances and angles of rotation.

In an alternative embodiment, the rotation point is located between the eyes, on or near the surface of the face. As a result, a natural representation of the human face is obtained which is highly suitable for identification purposes, wherein the eye position of the imaged person remains constant when the image is rotated in relation to the observer.

In one preferred embodiment, it is ensured during the formation of the interlaced images on the carrier under the linear lenses that the eye positions of each image are applied in an overlapping manner onto the substrate. When the three-dimensional image is viewed by a checking person, the viewed eye position of the image will thereby always remain constant and this eye position will be permanently in sharp focus. The other parts of the face will rotate as the viewing angle varies and may also vary in sharpness. By allowing the eye positions of the basic image and the rotation images to coincide on the carrier, the accuracy and effectiveness of visual inspection are increased.

In a further embodiment, a mark, which is relatively small in relation to the images, is placed in the processing device on the at least two images.

By applying a mark placed in front of the object, for example a security mark with digits and/or letters, this mark on the image appears to move backwards and forwards in front of the imaged object if the image is viewed from different viewing directions. As a result, an additional authenticity characteristic is formed in the image, which helps to establish the authenticity and/or uniqueness of the image.

The imaging device preferably comprises a laser and a carrier table with an image surface, wherein the laser is movable along image lines over the image surface, wherein the carrier table is rotatable around an axis located in the direction of the image lines, wherein a carrier layer is positioned on the carrier table with the linear lens pattern above it and the image lines are applied with the laser via the lens pattern in the carrier layer and wherein, following the application of an image, the carrier table is rotated, after which the next image is applied onto the carrier layer.

Since the tilting of the carrier table is linked to the rotation angle of the calculated rotation images, an effective and accurate production of stereoscopic images is obtained on the basis of a single image.

### Brief description of the figures

A number of embodiments of a method for producing a three-dimensional image according to the invention will be explained in detail by way of example with reference to the attached drawing. In the drawing:
Fig. 1 shows a cross section view of a known linear lens structure for the representation of interlaced images,
Fig. 2 shows a schematic representation of a stereoscopic image with the aid of a lens structure according to Fig. 1,
Fig. 3 shows the facial points in the basic image,
Fig. 4 shows schematically the formation of a three-dimensional primary form in the image area,
Fig. 5a and 5b respectively show a top view and a side view of the primary form,
Fig. 6a shows a projection of the basic image onto the primary form in the image area to obtain the facial form,
Fig. 6b and Fig. 6c show the rotation of the facial form and the projection thereof onto an image surface to form rotation images,
Fig. 7 shows a flowchart for the formation of a three-dimensional image according to the invention,
Fig. 8 shows a schematic representation of the formation of a three-dimensional image from the original basic image and the rotated images obtained via calculation in the steps according to Fig. 3 - Fig. 6c,
Fig. 9 shows a known method for the simultaneous production of four images from different angles,
Fig. 10 shows a schematic representation of the method according to the invention,
Fig. 11 shows a schematic representation of a device for producing a three-dimensional image according to the invention, and
Fig. 12 shows an image with a mark applied in front of an imaged person.

### Detailed description of the invention

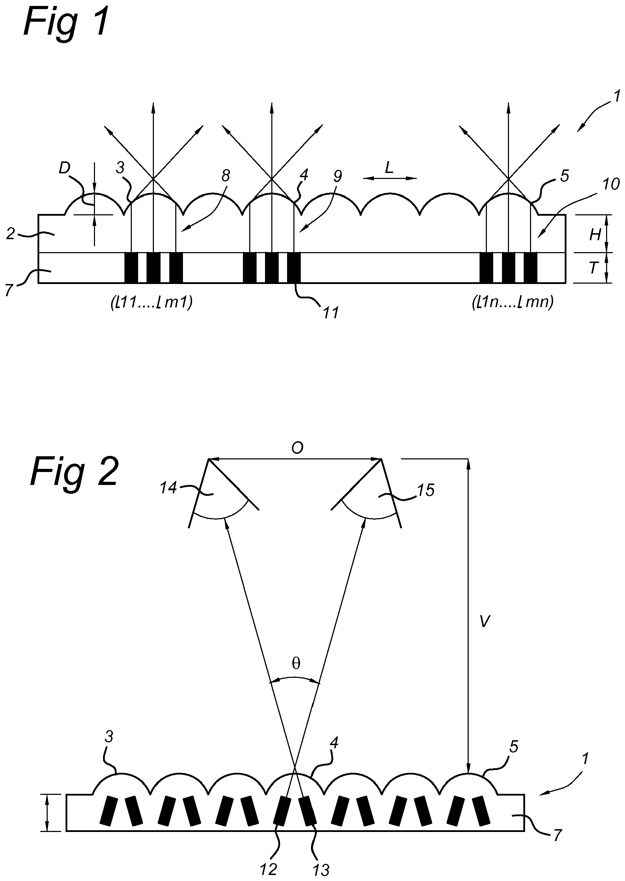

Fig. 1 shows schematically a cross section of a three-dimensional image known per se which is applied onto an image carrier 1 and which is represented by means of a series of linear cylindrical lenses 3, 4, 5. The image carrier can be used, for example, in security or identity documents, such as driving licences, bank passes, passports, visa stickers, etc. The image carrier 1 comprises a substrate 2 which is provided on the upper side with a series of n linear lenses 3, 4, 5. The number of lenses n is, for example, 130 lenses per cm. A series of linear lenses of this type is known from US 7,480,100.

In an image layer 7 of the substrate 2, a group 8, 9, 10 of interlaced image lines is applied which comprise image elements (pixels) which are burned via a laser into the image layer 7. In the example shown, the groups of image lines 8-10 are formed by vertical areas of carbonized image layer material (for example polycarbonate), which are formed in places where the laser beam is focused by the lenses 3-5 on the image layer 7. Since the laser beam is focused by the lenses 3-5 during the writing of the image lines into the image layer, the groups of interlaced image lines are exactly aligned in relation to the lenses 3-5.

Each group 8, 9, 10 of image lines (l₁₁, l₂₁...lₘ₁) (l₁ₙ, l₂ₙ,...lₘₙ) comprises m lines, wherein m may be between 2 and 60 (for the sake of clarity, only 3 image lines per group are shown). Each image line in a group is deflected by the associated lens in a predefined direction to the observer. An observer viewing the image carrier 1 from a specific angle will ideally only see 1 image line per lens with one eye, for example image line l₁ᵥ, l₂ᵥ..lₘᵥ in each group of image lines (l_{11...}lₘ₁), (l₂₁...lₘ₂),...,( l₁ₙ...lₘₙ). Different images can be viewed through movement of the observer in relation to the image carrier 1.

The height H of the substrate 2 is, for example, 250 µm. The thickness T of the image layer 7 is, for example, 50 µm. The width L of a linear lens is, for example, 75 µm and the height D of a lens can be 10 µm. The width of the carbonized areas 11 in the image layer is around 15 µm and the distance between these areas is around 1 µm.

As shown in Fig. 2, at least two image lines 12, 13 can be applied in the image layer 7 for each lens 3-5 at an angle θ (for example 12°) such that, with a viewing distance V of, for example, between 40-70 cm, a respective image line 12, 13 is viewed by each eye 14, 15 of an observer, said eyes 14, 15 being at a distance from one another of around 6 cm. This creates a stereoscopic or 3-dimensional view of the image. By applying a plurality of pairs of stereoscopic image lines for each lens 3-5, a stereoscopic effect can be obtained for the observer over various viewing distances V. The production of stereoscopic images is described in detail in European patent application EP 1 874 557.

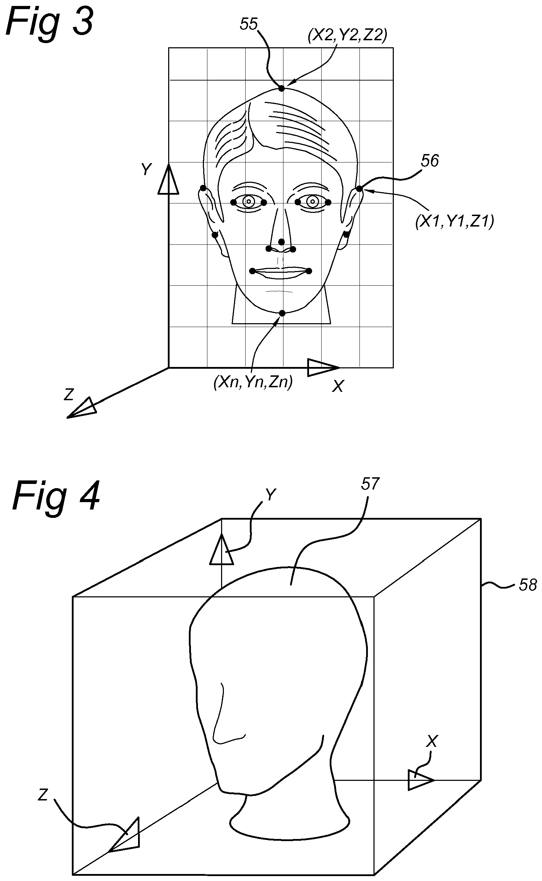

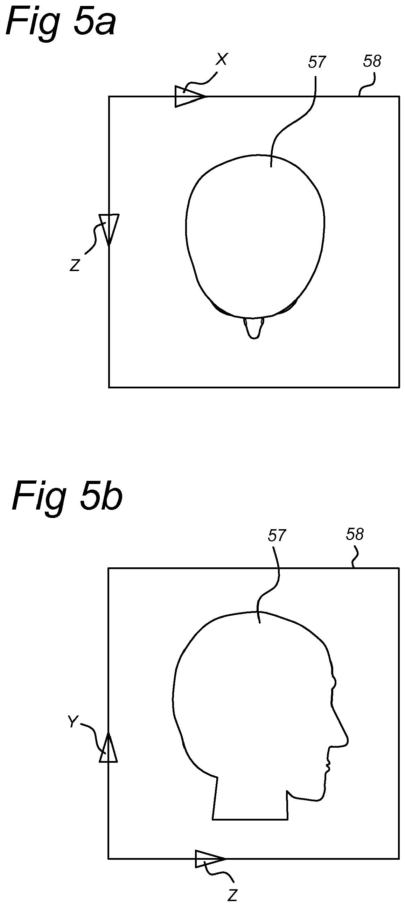

Figure 3 shows that facial points 55, 56 are defined in the basic image A. These facial points have coordinates (x, y) in the two-dimensional projection surface of the image located on z-coordinate zₚ. Coordinates (x₁y₁, z₁), (x₂y₂, z₂)... (xₙyₙ, zₙ) are allocated to these facial points in the three-dimensional image area (x, y, z), denoted as 58. These facial points may comprise, for example, the corners of the eyes, the corners of the mouth, the tip of the nose, the nostrils, the chin, the forehead, the ears, etc. of the imaged person. The primary form 57 is determined in the three-dimensional image area 58 from the set of facial points {(x₁y₁, z₁), (x₂y₂, z₂),..., (xₙyₙ, zₙ)}, as shown in Figure 4. Figure 5a shows a top view of the primary form 57 in the image area 58 and Figure 5b shows a side view.

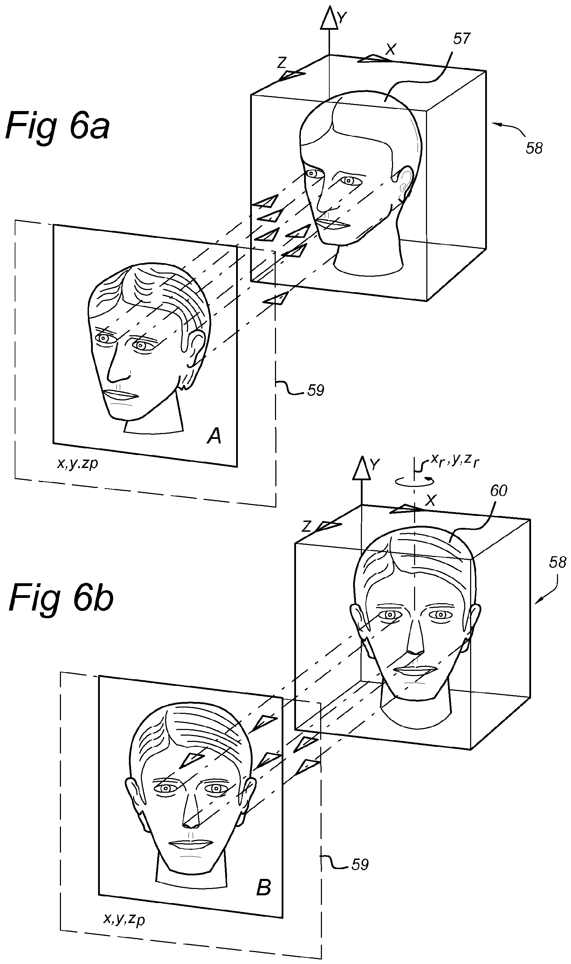

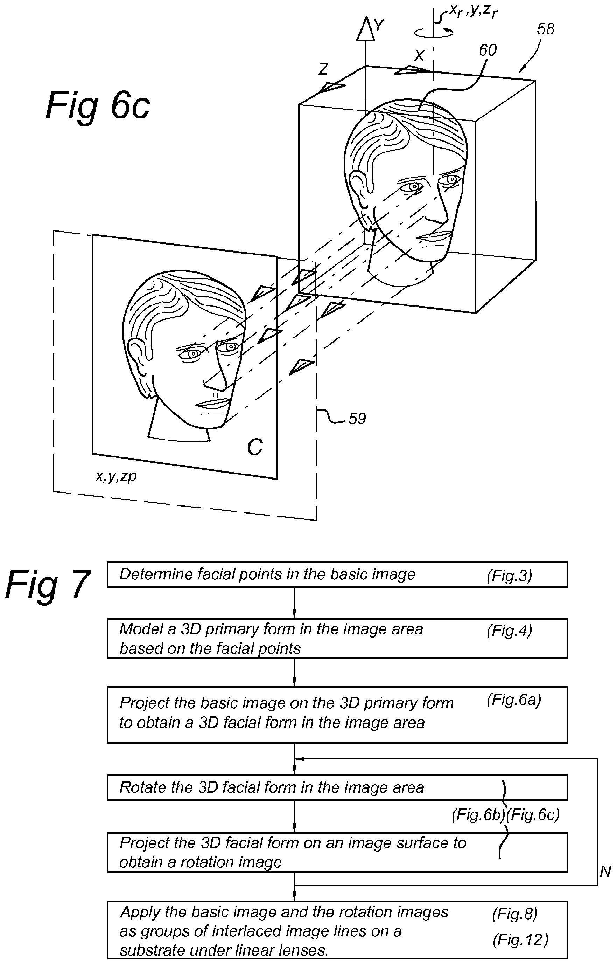

The basic image A of the person is then projected from a projection surface 59 with coordinate zₚ, in the image area 58 onto the primary form 57 in order to form the facial form 60 in the image area 58, as shown in Figure 6a. The facial form 60 is then rotated around the rotation y-axis (xᵣ, y, zᵣ) at an angle of, for example, 2 degrees. The rotated facial form 60 is applied through projection onto the projection surface (x, y, zₚ) to form rotation image B. Rotation image C is formed in a similar manner, being rotated in relation to the image A through an angle of, for example, 4 degrees around the rotation axis (xᵣ, y, zᵣ), as shown in Figure 6c.
The steps which are carried out in the image processing device and which are described with reference to Fig. 3, Fig. 4, Fig. 6a-6c, Fig. 8 and Fig. 12 are shown in the flow diagram 7 for the formation of N rotation images.

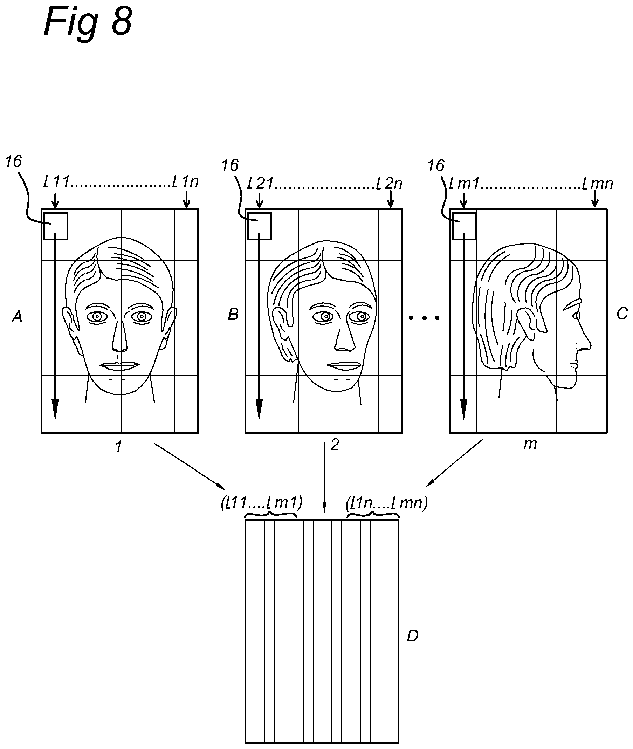

Fig. 8 shows in a schematic manner a first image A, in the memory of an image processing device, said image A being constructed from pixels 16, each of which has an image value, such as a brightness and/or colour. The pixels 16 of the image A can be formed directly on an image sensor in a digital camera when an image is captured, or can be obtained through the optical scanning of an image printed on paper. The pixels 16 of the first image A are positioned along vertically oriented image lines (l₁₁...l₁ₙ) which form columns in the pixel matrix. Images B and C represent m-1 rotation images, wherein the object provided in the first image A is represented from different viewing angles. The pixels 16 of the images B and C are positioned along image lines (l₂₁...l₂ₙ) and (lₘ₁...lₘₙ). The image values of the pixels 16 are stored in a memory of an image processing unit, which may form part of a computer, and are accessible in the memory along the image lines in the direction of the arrows indicated schematically in the figure, m groups of image lines (l₁₁...lₘ₁)... (l₁ₙ...lₘₙ) are formed in the image processing unit.

The image values of the pixels 16 are converted for each group of image lines into an intensity and/or colour and are applied onto a carrier in a direction which corresponds to the arrows in the images A-C in order to obtain the three-dimensional image D, as explained in detail with reference to Fig. 6.

The three-dimensional image D is composed by combining rotation images A, B, C, wherein the images B and C are calculated according to the invention on the basis of the original image A. When projecting the images A-C onto the carrier, it is ensured that the coordinates of eye positions (xₒ, yₒ) of these images for the original A and for the rotation images B, C are identical: (xₒ, yₒ)A=(xₒ, yₒ)B= (xₒ, yₒ)C. As a result, when the image D is viewed from different angles, the observer will retain the eye area in constant sharp focus so that visual inspection of the image and comparison of this image with the actual person are simplified. It is also possible to use different original images A in the construction of the 3-dimensional image D.

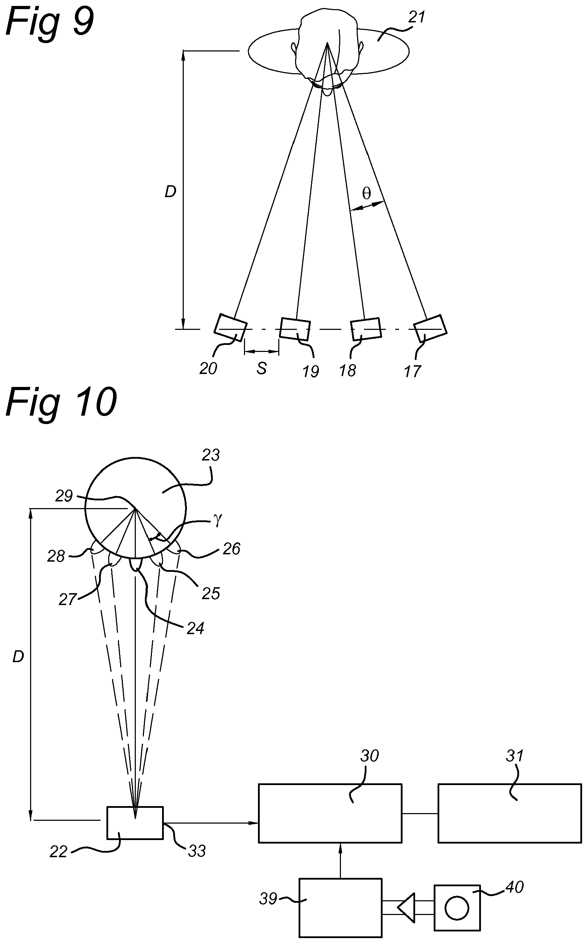

Fig. 9 shows a known set-up for creating a stereoscopic image of a person 21 with four cameras 17, 18, 19, 20 which are located at a distance S from one another of, for example, 6 cm and which simultaneously create an image of the face of the person 21. The distance D is, for example, 1.8 m, so that an angle θ between two adjacent images is around 2°. Use of four simultaneously operating cameras 17-20 is relatively costly.

Fig. 10 shows schematically how, with a single digital camera 22, an image is created of an object, such as a face of a person 23 in an upright position, wherein a schematically represented nose of the person 23 points straight at the camera. A distance between the camera 22 and a point of rotation 29 of the person 23 D is, for example, 60 cm. The camera 22 forms image elements of the upright image of the person 23 and forwards the image values associated with these image elements, such as intensity and colour values, via the output 33 to a processing unit 30. In an alternative method, an image 40 of a person can be supplied via a scanner 39 to the processing unit 30 for storage of the pixels and associated image values in the processing unit 30.

In the processing unit 30, one or more rotation images are formed (in this example, four rotation images are formed) from the pixels of the upright image 24 and are represented by the schematic positions 25, 26, 27 and 28 of the nose 24. The rotation angle γ is, for example, in each case between 2 degrees in a positive or negative direction of rotation. The four rotation images are stored in the processing unit 30 in the form of image values associated with pixels positioned along image lines. From the processing unit 30, the image information for each rotation image is supplied to a write device 31 which comprises a laser and a tiltable carrier table on which an image carrier of the type shown in Fig. 1 and Fig. 2 is positioned. The image values of the pixels of each rotation image are burned by the laser in an interlaced manner into the image layer along image lines running parallel with linear lenses. For each rotation image, the carrier table is tilted through an angle corresponding to the angle of rotation γ. In the case of four rotation images, groups of four image lines are formed, so that two stereoscopic images are obtained which can be viewed at two viewing distances V as a three-dimensional image. In the formation of groups of m image lines, the number of distances at which a stereoscopic image is viewed increases to m/2. To improve the quality as an identification image, the original image 24, 40 can be added to the interlaced three-dimensional image.

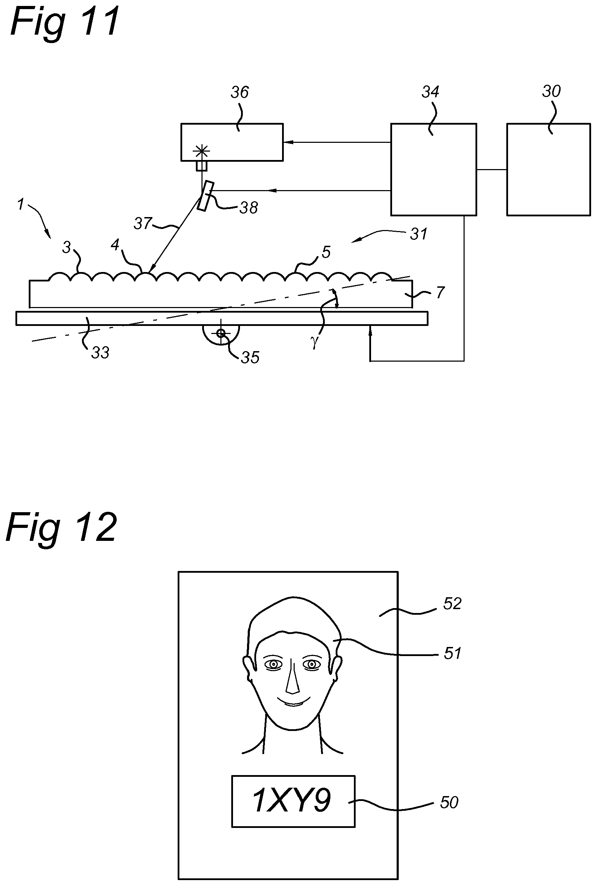

Fig. 11 shows a write device 31 for the formation of a stereoscopic image on an image carrier 1, which is positioned on a carrier table 33. The carrier table 33 is rotatable around an axis 35 located perpendicular to the drawing surface. A laser beam 37 generated by a laser 36 is scanned over the lens surface via a tiltable mirror 38 along image lines which are parallel with one another and which are located in the direction of the axis 35 from the drawing surface. The lenses 3-5 focus the laser beam on the image layer 7 of the image carrier 1. The laser 36, the mirror 38 and the carrier table 33 are controlled by a control unit 34, which receives the image signals formed in the processing unit 30 as an input signal. If the image lines of a first image are applied onto the image carrier 1, wherein an image line is burned into the image layer under each lens 3-4, the carrier table 33 is tilted and a following rotation image is projected with the laser onto the image carrier and burned into the image layer, until all m rotation images are applied.

Fig. 12 shows an embodiment in which a mark 50, such as a security mark or authenticity code, is applied to each image 52 from which the three-dimensional image is constructed. In the formed three-dimensional image 52, the mark 50 is located in front of the portrait 51 of the person 23. A mark can be applied with the image processing unit in each case in two-dimensional form in the image area 58, for example on a z-coordinate zₘ positioned between the z-coordinate of the projection surface zₚ and the facial form 60 (see Fig. 6a-6c). Since the two-dimensional mark 50 is located at a fixed position between the rotation axis (xᵣ, y, zᵣ) of the facial form 60 and the projection surface (x, y, zₚ), the mark 50 moves in the image 52 when the angle of view of the observer changes in relation to the portrait 51.

## Claims

1. Method for producing an identity document comprising a three-dimensional portrait image (52; D) of a person (23), comprising the steps of:
- providing a two-dimensional basic image (A) of the person (23), wherein the basic image (A) is constructed from pixels (16) and the pixels (16) are positioned along image lines (l₁₁...l₁ₙ),
- supplying image values associated with the pixels of the basic image (A) to a processing device (30),
- determining, in the processing device, the position of a number of facial points (55, 56) in the two-dimensional basic image (A),
- forming, in the processing device, a three-dimensional primary form (57) of the person (23) on the basis of these facial points (55, 56) in an image area (58),
- projecting, in the image area (58), the basic image (A) from a projection surface (x, y, zp) onto the three-dimensional primary form (57) to thereby supply a three-dimensional facial form (60),
- calculating, in the processing device, m-1 rotated images (B, C), m being larger than 1, constructed from pixels and rotated around a rotation point through a rotation angle, wherein the m-1 rotated images (B, C) are calculated on the basis of the basic image (A) and formed through rotation of the facial form (60) and projection thereof onto the projection surface (x, y, zp),
- dividing the m-1 rotated images (B, C) into image lines (l₂₁...l₂ₙ) ... (lₘ₁...lₘₙ),
- forming groups of corresponding image lines (l₁₁...lₘ₁), (l₁₂...lₘ₂) ... (l₁ₙ...lₘₙ) for the m images (A and B, C), including the basic image (A) and the m-1 rotated images (B, C),
- supplying image values associated with pixels located along the image lines for the groups of corresponding image lines to an imaging device (33, 34, 36, 38), and
- applying image intensities and/or colours corresponding to the image values with the imaging device (33, 34, 36, 38) onto a substrate (1) under a pattern of linear lenses (3, 4, 5), in such a way that the image intensities and/or colours of each group of corresponding image lines are applied under a linear lens associated with the group.

2. Method according to Claim 1, wherein, in each image (A, B, C), eye positions ((xₒ, yₒ)A, (xₒ, yₒ)B, (xₒ, yₒ)C) are determined, said eye positions being applied in an overlapping manner when the images are applied onto the substrate.

3. Method according to Claim 1 or 2, comprising the step of producing the first image (A) with an image-recording device (22) at a distance D from the object, said distance D being between 40 cm and 3 m and a rotation angle being between 2 and 12 degrees.

4. Method according to Claim 3, wherein a rotation axis (xᵣ, y, zᵣ) is located in the image area (58) between the eyes, on or near the surface of the face.

5. Method according to one of the preceding claims, wherein a mark (50), which is relatively small in relation to the images and which is placed in front of the portrait, is placed in the processing device in the at least two images preceding the application of the images onto the substrate.

6. Method according to Claim 5, wherein the mark (50) comprises digits and/or letters.

7. Method according to one of the preceding claims, wherein the number m of images (A, B, C) is at least four and the number of image lines in an image (D) is at least 100 per cm.

8. Method according to one of the preceding claims, wherein the imaging device comprises a laser (36) and a carrier table (33) with an image surface, wherein the laser is movable along image lines over the image surface, wherein the carrier table is rotatable around an axis (35) located in the direction of the image lines, wherein a carrier layer (1) is placed on the carrier table with the linear lens pattern above it and the image lines are applied with the laser via the lens pattern into the carrier layer and whereby, following the application of an image, the carrier table (33) is rotated around the axis (35), after which the next image is applied onto the carrier layer.

## Patentansprüche

1. Verfahren zur Herstellung eines Identitätsdokuments, das ein dreidimensionales Porträtbild (52; D) einer Person (23) umfasst, umfassend die Schritte:
Bereitstellen eines zweidimensionalen Basisbildes (A) der Person (23), wobei das Basisbild (A) aus Pixeln (16) aufgebaut ist und die Pixel (16) entlang von Bildlinien (lₗₗ...lₗₙ) positioniert sind.
Liefern von Bildwerten, die den Pixeln des Basisbildes (A) zugeordnet sind, an eine Verarbeitungsvorrichtung (30),
Bestimmen der Position einer Anzahl von Gesichtspunkten (55, 56) in dem zweidimensionalen Basisbild (A) in der Verarbeitungsvorrichtung,
Ausbilden einer dreidimensionalen Primärform (57) der Person (23) auf Basis dieser Gesichtspunkte (55, 56) in einem Bildbereich (58),
Projizieren des Basisbildes (A) von einer Projektionsfläche (x, y, zp) auf die dreidimensionale Primärform (57) im Bildbereich (58), um dadurch eine dreidimensionale Gesichtsform (60) zu liefern,
Berechnen von m-1 gedrehten Bildern (B, C), wobei m größer als eins ist, die aus Pixeln aufgebaut und um einen Drehpunkt um einen Drehwinkel gedreht sind, wobei die m-1 gedrehten Bilder (B, C) auf der Basis des Basisbildes (A) berechnet und durch Drehung der Gesichtsform (60) und durch Projektion dieser auf die Projektionsfläche (x, y, zp) ausgebildet werden,
Aufteilen des m-1 gedrehten Bildes (B,C) in Bildlinien (l₂₁...l₂ₙ) .... (lₘ₁-lₘₙ)
Ausbilden von Gruppen von zugehörigen Bildlinien (l₁₁...lₘ₁), (l₁₂...lₘ₂)...(l₁ₙ-lₘₙ) für die m Bilder (A und B, C), einschließlich des Basisbildes (A) und der m-1 gedrehten Bilder (B, C),
Liefern von Bildwerten, die entlang der Bildlinien der Gruppen von zugehörigen Bildlinien liegenden Pixeln zugehörig sind, an eine Abbildungsvorrichtung (33, 34, 36, 38) und
Aufbringen von Bildintensitäten und/oder Farben entsprechend den Bildwerten mit der Abbildungsvorrichtung (33, 34, 36, 38) auf einen Träger (1) unter einem Muster von Linearlinsen (3, 4, 5), so dass die Bildintensitäten und/oder Farben jeder Gruppe von zugehörigen Bildlinien mittels einer der Gruppe zugehörigen Linearlinse aufgebracht werden.

2. Verfahren nach Anspruch 1, wobei in jedem Bild (A, B, C) Augenpositionen ((x₀, y₀)A, (x₀, y₀)B, (x₀, y₀)C) bestimmt werden, wobei die Augenpositionen überlappend aufgebracht werden, wenn die Bilder auf den Träger aufgebracht werden.

3. Verfahren nach Anspruch 1 oder 2, umfassend den Schritt der Erzeugung des ersten Bildes (A) mit einer Bildaufnahmevorrichtung (22) in einem Abstand D von dem Objekt, wobei der Abstand D zwischen 40 cm und 3 m beträgt und ein Drehwinkel zwischen 2 und 12 Grad beträgt.

4. Verfahren nach Anspruch 3, wobei eine Drehachse (xᵣ, y, zᵣ) im Bildbereich (58) zwischen den Augen, auf oder nahe der Gesichtsoberfläche angeordnet ist.

5. Verfahren nach einem der vorhergehenden Ansprüche, wobei eine Markierung (50), die im Verhältnis zu den Bildern relativ klein ist und die vor dem Portrait angeordnet ist, in der Verarbeitungsvorrichtung in den mindestens zwei Bildern, die dem Aufbringen der Bilder auf das Substrat vorausgehen, angeordnet ist.

6. Verfahren nach Anspruch 5, wobei die Markierung (50) Ziffern und/oder Buchstaben umfasst.

7. Verfahren nach einem der vorhergehenden Ansprüche, wobei die Anzahl m der Bilder (A, B, C) mindestens vier beträgt und die Anzahl der Bildlinien in einem Bild (D) mindestens 100 pro cm beträgt.

8. Verfahren nach einem der vorhergehenden Ansprüche, wobei die Abbildungsvorrichtung einen Laser (36) und einen Trägertisch (33) mit einer Bildoberfläche umfasst, wobei der Laser entlang von Bildlinien über die Bildoberfläche bewegbar ist, wobei der Trägertisch um eine Achse (35), die in Richtung der Bildlinien angeordnet ist, drehbar ist, wobei eine Trägerschicht (1) auf dem Trägertisch mit dem linearen Linsenmuster darüber angeordnet ist und die Bildlinien mit dem Laser über das Linsenmuster in die Trägerschicht eingebracht werden und wobei nach dem Aufbringen eines Bildes der Trägertisch (33) um die Achse (35) gedreht wird, wonach das nächste Bild auf die Trägerschicht aufgebracht wird.

## Revendications

1. Méthode de production d'un document d'identité comprenant une image de portrait tridimensionnelle (52 ; D) d'une personne (23), comprenant les étapes consistant à :
- fournir une image de base bidimensionnelle (A) de la personne (23), dans laquelle l'image de base (A) est constituée de pixels (16), et les pixels (16) sont positionnés le long de lignes d'image (lₗₗ ... lₗₙ),
- fournir des valeurs d'image associées aux pixels de l'image de base (A) à un dispositif de traitement (30),
- déterminer, dans le dispositif de traitement, la position d'un nombre de points faciaux (55, 56) dans l'image de base bidimensionnelle (A),
- former, dans le dispositif de traitement, une forme primaire tridimensionnelle (57) de la personne (23) sur la base de ces points faciaux (55, 56) dans une zone d'image (58),
- projeter, dans la zone d'image (58), l'image de base (A) à partir d'une surface de projection (x, y, zp) jusque sur la forme primaire tridimensionnelle (57) pour fournir ainsi une forme faciale tridimensionnelle (60).
- calculer, dans le dispositif de traitement, m-1 images tournées (B, C), m étant supérieur à 1, construites à partir de pixels et tournées autour d'un point de rotation selon un angle de rotation, dans laquelle les m-1 images tournées (B, C) sont calculées sur la base de l'image de base (A) et formées par rotation de la forme faciale (60) et projection de celle-ci sur la surface de projection (x, y, zp),
- diviser les m-1 images tournées (B, C) en lignes d'image (l₂₁ ... l₂ₙ) ... (lₘ₁ ... lₘₙ),
- former des groupes de lignes d'image correspondantes (lₗ₁ ... lₘₗ), (lₗ₂ ... lₘ₂) ... (lₗₙ ... lₘₙ) pour les m images (A et B, C), y compris l'image de base (A) et les m-1 images tournées (B, C),
- fournir des valeurs d'image associées à des pixels situés sur les lignes d'image pour les groupes de lignes d'image correspondantes à un dispositif d'imagerie (33, 34, 36, 38), et
- appliquer des intensités d'image et/ou des couleurs correspondant aux valeurs d'image avec le dispositif d'imagerie (33, 34, 36, 38) sur un substrat (1) sous un motif de lentilles linéaires (3, 4, 5), de telle manière que l'image s'intensifie et/ou les couleurs de chaque groupe de lignes d'image correspondantes sont appliquées sous une lentille linéaire associée au groupe.

2. Méthode selon la revendication 1, dans laquelle, dans chaque image (A, B, C), des positions oculaires ((x₀, y₀)A, (x₀, y₀)B, (x₀, y₀)C) sont déterminées, lesdites positions oculaires étant appliquées de manière superposée lorsque les images sont appliquées sur le substrat.

3. Méthode selon la revendication 1 ou 2, comprenant l'étape consistant à produire la première image (A) avec un dispositif d'enregistrement d'image (22) à une distance D de l'objet, ladite distance D étant comprise entre 40 cm et 3 m, et un angle de rotation se situant entre 2 et 12 degrés.

4. Méthode selon la revendication 3, dans laquelle un axe de rotation (xᵣ, y, zᵣ) est situé dans la zone d'image (58) entre les yeux, sur ou près de la surface du visage.

5. Méthode selon l'une des revendications précédentes, dans laquelle une marque (50), qui est relativement petite par rapport aux images et qui est placée devant le portrait, est placée dans le dispositif de traitement sur au moins deux images précédant l'application des images sur le substrat.

6. Méthode selon la revendication 5, dans laquelle la marque (50) comprend des chiffres et/ou des lettres.

7. Méthode selon l'une des revendications précédentes, dans laquelle le nombre m d'images (A, B, C) est d'au moins quatre, et le nombre de lignes d'image dans une image (D) est d'au moins 100 par cm.

8. Méthode selon l'une des revendications précédentes, dans laquelle le dispositif d'imagerie comprend un laser (36) et une table de support (33) avec une surface d'image, dans laquelle le laser peut se déplacer le long de lignes d'image au-dessus de la surface d'image, dans laquelle la table de support peut être tournée autour d'un axe (35) situé dans la direction des lignes d'image, dans laquelle une couche de support (1) est placée sur la table de support avec le motif de lentilles linéaires au-dessus de celle-ci et les lignes d'image sont appliquées avec le laser via le motif de lentilles jusque dans la couche de support et ainsi, à la suite de l'application d'une image, la table de support (33) est tournée autour de l'axe (35), après quoi l'image suivante est appliquée sur la couche de support.
